# EUROPEAN PATENT APPLICATION

(11) **EP 4 449 957 A1**
(43) Date of publication of application: **23.10.2024**
(21) Application number: 23822218.6
(22) Date of filing: 12.07.2023
(51) Int. Cl.: A47J 37/06, A47J 27/04

(54) **DOOR BODY ASSEMBLY AND COOKING APPLIANCE**

(30) Priority: 08.03.2023 CN 202310222053
(71) Applicant: Guangdong Midea Kitchen Appliances Manufacturing Co., Ltd., Foshan, Guangdong 528311 (CN)
(72) Inventor: LIU, Binbin, Foshan Guangdong 528311 (CN); CHO, Jae Man, Foshan Guangdong 528311 (CN); HUANG, Zhifei, Foshan Guangdong 528311 (CN); JOO, Modam, Foshan Guangdong 528311 (CN); LIU, Zhi, Foshan Guangdong 528311 (CN); WANG, Wenbo, Foshan Guangdong 528311 (CN); TIAN, Chensheng, Foshan Guangdong 528311 (CN)
(74) Representative: RGTH
(86) International application number: PCT/CN2023/106967
(87) International publication number: WO 2024/183208

(57) **Abstract**

The present disclosure provides a door assembly and a cooking appliance, and the door assembly is used in a cooking appliance, and the door assembly comprises: a main body; a door seal assembly, connected to the side of the main body facing a cooking cavity of the cooking appliance, and the door seal assembly is provided with a first heat insulating plate at the side facing the cooking cavity, the first heat insulating plate is made of a high temperature resistant material, and the first heating insulating plate covers at least a portion of the main body. Thus, the first heat insulating plate is able to be configured to insulate heat to protect other components in the door assembly, cool down the interior of the door assembly and the wall face of the door assembly facing the outside, prolong the service life of the door assembly, prevent the door assembly from burning the user and improve the product safety. Moreover, as the first partition plate covers at least a portion of the main body, the side of the door assembly facing the cooking cavity is more beautiful and simpler, and then the beauty degree of the door assembly is improved.

## Description

### CROSS-REFERENCE TO RELATED APPLICATIONS

This disclosure claims priority to Chinese Patent Application No. 202310222053.7 filed with China National Intellectual Property Administration on March 8, 2023 and entitled "DOOR ASSEMBLY AND COOKING APPLIANCE", the entire contents of which are herein incorporated by reference.

### FIELD

The embodiments of the present disclosure relate to the field of household electrical equipment, and particularly, relates to a door assembly and a cooking appliance.

### BACKGROUND

Microwave steaming and baking integrated machines in the prior art usually do not have a self-cleaning function, however, when a microwave steaming and baking integrated machine having the self-cleaning function is conducting high temperature self-cleaning, the temperature in its cooking cavity is excessively high, and the oven door in the prior art usually cannot bear a high temperature of 450°C.

### SUMMARY

The present disclosure aims to solve at least one of the technical problems existing in the prior art or related art.

Therefore, the first purpose of the present disclosure is to provide a door assembly.

The second purpose of the present disclosure is to provide a cooking appliance.

In order to achieve at least one of the above purposes, according to the first aspect of the present disclosure, a door assembly is provided, and the door assembly is for a cooking appliance, and the door assembly comprises: a main body; a door seal assembly, connected to one side of the main body facing a cooking cavity of the cooking appliance, and the door seal assembly is provided with a first heat insulating plate at the side facing the cooking cavity, the first heat insulating plate is made of a high temperature resistant material, and the first heating insulating plate covers at least a portion of the main body.

The door assembly provided in the present disclosure can be used in a cooking appliance, the cooking appliance comprises a box body, and the door assembly is movably connected to the box body and can move between different positions with respect to the box body. The box body comprises a cooking cavity, the cooking cavity is configured to accommodate food ingredients, and the cooking appliance can cook the food ingredients in the cooking cavity. When the door assembly moves between different positions, the door assembly can open or close the cooking cavity.

In a possible embodiment, the cooking appliance is a microwave steaming and baking integrated machine having a high temperature self-cleaning function, when the cooking appliance performs high temperature self-cleaning to the cooking cavity, the temperature within the cooking cavity can reach 450°C, to carbonize the oil in the cooking cavity and then achieve the self-cleaning function. A conventional door body cannot bear the high temperature of 450°C, firstly, the door body can be easily damaged due to the high temperature, and then a portion of the components in the door body fail, and secondly, since the door body cannot effectively insulate the high temperature in the cooking cavity, the temperature of the outer wall of the door body is too high, and then users can be easily burned.

Furthermore, in order to avoid the above problems, the present disclosure provides a door seal assembly which can improve the heat insulating effect in the door assembly. The door assembly comprises the main body and the door seal assembly; the door seal assembly is connected to one side of the main body facing the cooking cavity; when the door assembly closes the cooking cavity, the door seal assembly is attached to the box body of the cooking appliance to seal the cooking cavity. The first heat insulating plate is provided at the side of the door seal assembly facing the cooking cavity, and the first heat insulating plate is made of a high temperature resistant material, and the first heat insulating plate can be made of Borosilicate glass.

Furthermore, in order to improve the beauty degree of the door assembly, the present disclosure disposes the first heat insulating plate to cover at least a portion of the main body, i.e., the first heat insulating plate can cover the entire main body and the side of the door assembly facing the cooking cavity is configured to be an all-glass structure, or it can further cover most of the main body. Thus, this makes the door assembly more beautiful and simpler, and lowers the production costs of the door assembly, and has a good economic value.

Through disposing the first heat insulating plate of the door seal assembly at the side facing the cooking cavity to cover at least a portion of the main body, and through adopting the high temperature resistant material to manufacture the first heat insulating plate, the first heat insulating plate can be configured to insulate heat to protect other components in the door assembly, cool down the interior of the door assembly and the temperature of the wall face of the door assembly facing the outside, prolong the service life of the door assembly, prevent the door assembly from burning the user and improve the product safety. Moreover, as a first partition plate covers at least a portion of the main body, the side of the door assembly facing the cooking cavity is more beautiful and simpler, and then the beauty degree of the door assembly is improved.

The door assembly according to the present disclosure can further comprise the following distinguishing technical features.

In above embodiment, furthermore, the door seal assembly further comprises: a connecting frame, connected to the main body, and the first heat insulating plate is connected to the connecting frame, and is located at the side of the connecting frame facing the cooking cavity.

In the embodiment, the structure of the door seal assembly is further defined. The door seal assembly further comprises the connecting frame, and the connecting frame is configured to connect the first heat insulating plate with the main body. The connecting frame is located between the main body and the first heat insulating plate, and is connected to the main body, and the first heat insulating plate is connected to the side of the connecting frame deviating from the main body, and thus, the first heat insulating plate can be connected to the main body through the connecting frame.

In a possible embodiment, the connecting frame is made of a metal material, and the strength of the connecting frame can meet use requirements, and the first heat insulating plate can be stably connected to the main body; in addition, the metal material can bear a high temperature of 450 °C,and the overall door assembly can meet the temperature resistance requirements.

Through providing the connecting frame in the door seal assembly, the first heat insulating plate can be connected to the main body through the connecting frame.

In the above embodiment, furthermore, the connecting frame is located within the projection range of the first heat insulating plate.

In the embodiment, the relationship between the connecting frame and the first heat insulating plate is defined. The connecting frame is located within the projection range of the first heat insulating plate. Understandably, since the first heat insulating plate has the heat insulation function, through providing the connecting frame within the projection range of the first heating insulating plate, the connecting frame can be protected through the first heat insulating plate, and the influence to the connecting frame due to the high temperature in the cooking cavity is reduced. Secondly, through providing the connecting frame within the projection range of the first heat insulating plate, this prevents exposing the connecting frame within the user's sight, and thus the door assembly can keep beautiful and simple, and the beauty degree of the door assembly is improved.

In the above embodiment, furthermore, at least one glue filling groove is provided at the side of the connecting frame facing the cooking cavity; the glue filling groove is configured to accommodate a binder and the first heat insulating plate is bonded to the connecting frame.

In the embodiment, the connecting method between the connecting frame and the first heat insulating plate is defined. The first heat insulating plate is bonded to the connecting frame. At least one glue filling groove is provided at the side of the connecting frame facing the cooking cavity, the glue filling groove can accommodate a binder, and thus the first heat insulating plate is bonded to the connecting frame through the binder. Therefore, the first heat insulating plate can be connected to the connecting frame, meanwhile, the side of the first heat insulating plate facing the cooking cavity can keep tidy; compared with the structure that the first heat insulating plate is connected to the connecting frame by a screw, the present disclosure adopts the bonding method to connect the first heat insulating plate to the connecting frame, and this can prevent the screw from exposing out of the surface of the first heat insulating plate, and improve the beauty degree of the door assembly.

Furthermore, in the case that there are multiple glue filling grooves, the multiple glue filling grooves are respectively close to the two sides of the connecting frame, and the force on the two sides of the first heat insulating plate is balanced, and the first heat insulating plate can be more stably connected to the connecting frame.

Furthermore, the binder in the glue filling grooves can bear a high temperature of 450°C, and thus the binder does not fail in a high temperature environment.

Through disposing the glue filling groove in the connecting frame, the first heat insulating plate can be bonded to the connecting frame by filling glues in the glue filling groove, and thus, the side of the first heat insulating plate facing the cooking cavity can keep tidy; compared with the structure that the first heat insulating plate is connected to the connecting frame by a screw, the present disclosure adopts the bonding method to connect the first heat insulating plate to the connecting frame, and this can prevent the screw from exposing out of the surface of the first heat insulating plate, and improve the beauty degree of the door assembly.

In the above embodiment, furthermore, the door seal assembly further comprises: a sealing member, sleeved on the first heat insulating plate; a door seal frame, having a mounting opening, and the first heat insulating plate and the sealing member are mounted in the mounting opening, and the sealing member is located between the first heat insulating plate and the inner wall of the mounting opening.

In the embodiment, another structure of the door seal assembly is defined. The door seal assembly can further comprise the door seal frame and the sealing member; compared with the structure that the side of the door seal assembly facing the cooking cavity is disposed to be all glass, the structure of the door seal assembly with the door seal frame and the sealing member arranged in such a way can have a better protection effect for the first heat insulating plate.

In an embodiment, the sealing member is sleeved on the circumferential side of the first heat insulating plate; the door seal frame has the mounting opening; the first heat insulating plate and the sealing member are mounted in the mounting opening, and at least a portion of the sealing member is located between the first heat insulating plate and the inner wall of the mounting opening; the sealing member is compressed by the first heat insulating plate and the inner wall of the mounting opening, and thus has the sealing function. The gap between the first heat insulating plate and the inner wall of the mounting opening can be sealed through the sealing member, to prevent the moisture in the cooking cavity from entering into the door assembly. In addition, wrapping the edge of the first heating insulate plate with the sealing member and the door seal frame can have a certain protection function for the first heat insulating plate; compared with the structure that the side of the door seal assembly facing the cooking cavity is configured to be all glass, the strength of the door seal assembly provided with the door seal frame and the sealing member is enhanced, and furthermore, the reliability of the door assembly is improved.

In the above embodiment, furthermore, the first heat insulating plate is made of a high temperature resistant glass.

In the embodiment, the material of the first heat insulating plate is defined. The first heat insulating plate is made of a high temperature resistant glass, and therefore, the first heat insulating plate has a good high temperature resistance performance, and the appearance of the high temperature resistant glass is tidy and beautiful, and thus, the beauty degree of the door assembly is enhanced.

In a possible embodiment, the first heat insulating plate is made of a Borosilicate glass.

In the above embodiment, furthermore, the door assembly further comprises: multiple partition plates, located in the main body, and the multiple partition plates are sequentially connected to the main body along a direction deviating from the cooking cavity; multiple air ducts are enclosed between any two adjacent partition plates and between the inner wall of the main body close to the cooking cavity and an adjacent partition plate, one end of the air duct communicates with a heat dissipation cavity of the cooking appliance and the other end communicates with the outside, and the air ducts are configured to discharge the air flow in the heat dissipation cavity, to cool down the door assembly.

In the embodiment, the structure of the door assembly is further defined. The door assembly comprises multiple air ducts, and the air ducts can conduct heat dissipation to the door assembly, to cool down the door assembly. The door assembly comprises the main body and multiple partition plates, the main body has a cavity structure therein, and the multiple partition plates are provided in the main body; the partition plates are configured to constitute the air ducts for ventilation; the multiple partition plates are all connected to the main body and the partition plates can keep fixed with respect to the main body, and the multiple partition plates are arranged sequentially along the direction deviating from the cooking cavity, and thus, the multiple air ducts are enclosed by the partition plates and the wall face of the main body.

In an embodiment, the air ducts are enclosed respectively between any two adjacent partition plates and between the inner wall of the main body close to the cooking cavity and an adjacent partition plate, and the main body has multiple air ducts. The cooking appliance using the door assembly further comprises the heat dissipation cavity, and a heat dissipating device for dissipating heat for the cooking appliance is provided in the heat dissipation cavity; the heat dissipating device can form an air flow and achieves the heat dissipation effect to the cooking appliance by discharging the air flow out of the cooking appliance. One end of any air duct communicates with the outside and the other end communicates with the heat dissipation cavity, the air flow in the heat dissipation cavity can be discharged to the outside through the air ducts in the door assembly, and thus, firstly, heat dissipation can be conducted to the door assembly through the air ducts, and this prevents damaging the door assembly due to the excessively high temperature in the door assembly, and secondly, through disposing the multiple partition plates, this effectively lowers the temperature of the wall face of the door assembly facing the outside, and prevents the door assembly from burning the user. Moreover, discharging the air flow in the heat dissipation cavity through the air ducts in the door assembly can further dissipate the heat in the heat dissipation cavity, and then has the function of lowering the temperature of the cooking appliance.

In a possible embodiment, the number of the partition plates is two, the air ducts are respectively enclosed between the two partition plates and between the partition plate close to the inner wall of the main body and the inner wall of the main body, and the door assembly has two air ducts therein, compared with a door body provided with a single air duct, through providing at least two air ducts in the door assembly, the present disclosure can improve the heat dissipation effect to the door assembly, and can insulate heat through the multiple partition plates, and avoid that the outer wall of the door assembly is too hot.

Through providing multiple partition plates in the main body, multiple air ducts can be formed through the multiple partition plates, and the air flow in the heat dissipation cavity of the cooking appliance is discharged to the outside through the air ducts; firstly, heat dissipation to the door assembly can be conducted through the multiple air ducts, and this prevents damaging the door assembly due to the high temperature in the cooking cavity and prolongs the service life and reliability of the door assembly, and secondly, the temperature of the wall face of the door assembly facing the outside can be lowered effectively, which prevents burning the user due to the excessively high temperature of the outer wall of the door assembly and improves product safety.

In the above embodiment, furthermore, the main body comprises: a middle frame assembly; a mounting frame connected to the middle frame assembly, and the mounting frame is located at the side of the middle frame assembly deviating from the cooking cavity, and the multiple partition plates are respectively located at the two sides of the mounting frame.

In the embodiment, the structure of the main body is defined. The main body comprises the middle frame assembly and the mounting frame, and the mounting frame and the middle frame assembly are respectively configured to fix the multiple partition plates. And the mounting frame is located at the side of the middle frame assembly deviating from the cooking cavity and is connected to the middle frame assembly, and there is a gap between the mounting frame and the middle frame assembly. The mounting frame can be connected to the middle frame assembly through a screw, and can further be connected to the middle frame assembly through other connecting methods. Furthermore, at least a portion of the multiple partition plates are connected to the mounting frame, and at least a portion of the multiple partition plates are connected to the middle frame assembly, to achieve mounting and fixing the multiple partition plates.

Furthermore, the multiple partition plates are respectively located at the two sides of the mounting frame, and there is a gap between two adjacent partition plates, and an air duct is enclosed between two adjacent partition plates. The inner wall of the middle frame assembly constitutes the inner wall of the main body, and there is a gap between the partition plate adjacent to the inner wall of the middle frame assembly and the inner wall of the middle frame assembly, and the inner wall of the middle frame assembly and the partition plate enclose the air duct.

Through providing the middle frame assembly and the mounting frame in the main body, the multiple partition plates can be fixed through the middle frame assembly and the mounting frame; through providing the multiple partition plates at the two sides of the mounting frame respectively, there can be a gap between two adjacent partition plates, and then two adjacent partition plates can enclose an air duct.

In the above embodiment, furthermore, the multiple partition plates comprise: a first partition plate, located between the mounting frame and the middle frame assembly, and the first partition plate is connected to the middle frame assembly, and the first partition plate and the middle frame assembly define a first air duct of the multiple air ducts; and a second partition plate, located at the side of the mounting frame deviating from the middle frame assembly, and the second partition plate is connected to the mounting frame, and the second partition plate and the first partition plate define a second air duct of the multiple air ducts.

In the embodiment, the multiple partition plates and the multiple air ducts are defined. The multiple partition plates comprise the first partition plate and the second partition plate, and the first partition plate is located between the mounting frame and the middle frame assembly, and is connected to the middle frame assembly. The first partition plate can be connected to the middle frame assembly through a screw, and can further be connected to the middle frame assembly through other connecting methods. There is a gap between the first partition plate and the inner wall of the middle frame assembly, and the first partition plate and the inner wall of the middle frame assembly define the first air duct of the multiple air ducts. One end of the first air duct communicates with the heat dissipation cavity and the other end communicates with the outside, and the air flow in the heat dissipation cavity can be discharged to the outside through the first air duct, to cool down the first one of the partition plates and the middle frame assembly.

Furthermore, the multiple partition plates further comprise the second partition plate, and the second partition plate is located at the side of the mounting frame deviating from the middle frame assembly and is connected to the mounting frame. A mounting groove is provided at the side of the mounting frame deviating from the middle frame assembly for mounting and fixing the second partition plate, the second partition plate can be inserted into the mounting groove, in addition, the second partition plate can further be connected to the mounting frame through other methods, as long as the second partition plate can be fixed with respect to the mounting frame and there is a gap between the second partition plate and the first partition plate. There is a gap between the first partition plate and the second partition plate, and the second air duct of the multiple air ducts is defined between the first partition plate and the second partition plate. One end of the second air duct communicates with the heat dissipation cavity and the other end communicates with the outside, and the air flow in the heat dissipation cavity can be discharged to the outside through the second air duct, to cool down the first one of the partition plates, the second partition plate and the mounting frame.

Through providing the first partition plate and the second partition plate in the door assembly, the first partition plate and the inner wall of the middle frame assembly enclose the first air duct, the second partition plate and the first partition plate enclose the second air duct, and the temperature of the middle frame assembly and the first partition plate can be lowered through the first air duct, and the temperature of the first partition plate and the second partition plate are lowered through the second air duct, to cool down the door assembly.

In the above embodiment, furthermore, the door assembly further comprises a baffle connected to the side of the mounting frame facing the middle frame assembly, and the baffle is configured to support the first partition plate, the baffle is provided with multiple air outlets, the air outlets are located between the first partition plate and the second partition plate, and the second air duct communicates with the outside through the air outlets.

In the embodiment, the structure of the door assembly is further defined. To further fix the first partition plate, the present disclosure further provides the baffle in the door assembly for supporting the first partition plate. The baffle is connected to the side of the mounting frame facing the middle frame assembly and extends along the direction facing the middle frame assembly, the bottom wall of the first partition plate abuts on the baffle, the baffle can support the first partition plate, therefore, the first partition plate can be further fixed, and the stability of the first partition plate is further improved.

Furthermore, the baffle is provided with multiple air outlets, the multiple air outlets are located between the first partition plate and the second partition plate, that is, the multiple air outlets are located at the side of the first partition plate deviating from the middle frame assembly, the air outlets are located at the air discharging path of the second air duct, and the second air duct can communicate with the outside through the air outlets. When air is discharged through the second air duct, the air flow in the heat dissipation cavity flows along the second air duct, and can flow to the outside through the multiple air outlets in the baffle, to achieve the air discharging function of the second air duct.

Furthermore, the baffle is further provided with multiple protrusions, the multiple protrusions are provided between the first partition plate and the air outlets, therefore, the first partition plate can be limited through the protrusions, and the first partition plate avoids the air outlets, and this prevents the first partition plate from shielding the air outlets and then affecting the air discharge of the second air duct.

Through providing the baffle on the mounting frame, the first partition plate can be supported through the baffle, and this further improves the stability of the first partition plate. Moreover, the air outlets are provided in the baffle, and the air outlets are provided between the first partition plate and the second partition plate, therefore the air flow in the second air duct can be discharged through the air outlets, the communication between the second air duct and the outside is achieved, then the air flow can be smoothly discharged through the second air duct, and the function of lowering the temperature of the door assembly is achieved.

In the above embodiment, furthermore, the baffle is provided with multiple air discharge grooves, the air discharge grooves are located between the first partition plate and the middle frame assembly, and the first air duct communicates with the outside through the air discharge grooves.

In the embodiment, the structure of the baffle is further defined. Multiple grooves are provided at the side of the baffle facing the middle frame assembly, the multiple grooves are respectively located in the two ends of the baffle, the middle frame assembly and the groove wall of the grooves in the baffle enclose the multiple air discharge grooves, the air discharge grooves are located between the first partition plate and the middle frame assembly and located at the air discharging path of the first air duct, and the first air duct can communicate with the outside through the air discharge grooves, the air flow in the first air duct can be discharged to the outside through air discharge grooves, and the normal air discharging function of the first air duct is achieved.

Through enclosing multiple air discharge grooves by the baffle and the middle frame assembly, the air discharge grooves are provided between the first partition plate and the middle frame assembly, and the first air duct can communicate with the outside through the air discharge grooves, and then the normal air discharge of the first air duct is achieved, and then the first air duct can have the function of lowering the temperature of the door assembly.

In the embodiment, the door assembly further comprises: multiple supporting members, connected to the side of the mounting frame deviating from the middle frame assembly, and any supporting member and the mounting frame enclose a mounting groove, and the second partition plate is inserted into the mounting groove; at least one limiting member, connected to the side of the mounting frame deviating from the middle frame assembly, and at least a portion of the second partition plate is located between the limiting member and the mounting frame, and the limiting member is configured to limit the second partition plate.

In the embodiment, the structure of the mounting frame is defined. To mount the second partition plate on the mounting frame, the present disclosure provides the supporting members in the mounting frame for mounting the second partition plate, there are multiple supporting members, and the multiple supporting members are connected to the side of the mounting frame deviating from the middle frame assembly, any supporting member and the mounting frame enclose the mounting frame; a notch of the mounting groove faces towards the mounting frame, and the second partition plate is inserted into the mounting groove, to achieve mounting and fixing the second partition plate.

In an embodiment, the supporting member is located in the area of the mounting frame close to the lower part of the mounting frame. Any supporting member extends along the direction deviating from the middle frame assembly and bends along the direction facing above the mounting frame, there is a certain gap between the bending portion of any supporting member and the mounting frame, and the bending portions of the multiple supporting members and the mounting frame jointly form the mounting groove. The second partition plate can be inserted into the mounting groove formed by the multiple supporting members, to mount and fix the second partition plate.

Through providing the multiple supporting members in the mounting frame, the second partition plate can be mounted and fixed through inserting the second partition plate in the mounting groove formed by the supporting members.

Furthermore, to further limit the second partition plate, the present disclosure further provides the limiting member for limiting the second partition plate on the mounting frame, the number of the limiting member can be one, while there can further be multiple limiting members, and the limiting member is connected to the side of the mounting frame deviating from the middle frame assembly. The limiting member is provided in the area of the mounting frame close to the upper part of the mounting frame, and the end of the second partition plate away from the supporting member can be limited through the limiting member, thus, the upper end and the lower end of the second partition plate can be respectively limited through the limiting member and the supporting member, and the second partition plate can be mounted on the mounting frame stably.

Furthermore, the structure of the limiting member is defined. The limiting member is connected to the side of the mounting frame deviating from the middle frame assembly, the limiting member extends along the direction deviating from the middle frame assembly and bends along the side facing the mounting groove, there is a gap between the bending of the limiting member and the mounting frame, and at least a portion of the second partition plate is located between the bending of the limiting member and the mounting frame, therefore, the second partition plate can be limited through the bending of the limiting member.

In a possible embodiment, the number of the limiting members is two, and the two limiting members are respectively close to the two sides of the second partition plate.

Through providing at least one limiting member on the mounting frame, the second partition plate can be further limited through the limiting member, and the second partition plate can be stably fixed on the mounting frame, and product stability and reliability are improved.

In the above embodiment, furthermore, the main body further comprises an outer door plate connected to the mounting frame, the outer door plate is provided at the side of the second partition plate deviating from the first partition plate, and a decoration plate is provided at the side of the second partition plate facing the outside.

In the embodiment, the structure of the main body is further defined. The main body further comprises the outer door plate, and the outer door plate is provided facing the outside, that is, the outer door plate is located at the side facing the user. The outer door plate is connected to the mounting frame, the side of the outer door plate facing the mounting frame is provided with multiple connecting grooves, the multiple connecting grooves are respectively close to the two sides of the outer door plate, the mounting frame is provided with connecting protrusions matching the connecting grooves, and the connecting protrusions are inserted into the notches of corresponding connecting grooves, and the outer door plate can be hooked on the mounting frame, and the connection between the mounting frame and the outer door plate is achieved.

Furthermore, to further mount and fix the outer door plate, the outer door plate can further be connected to the middle frame assembly, the outer door plate can be connected to the middle frame assembly through a screw. Therefore, the outer door plate can be mounted and fixed respectively through the cooperation between the connecting grooves and the connecting protrusions and the screw, and the outer door plate keeps stable with respect to the mounting frame and the middle frame assembly.

Furthermore, in order to keep the beauty of the door assembly, the present disclosure further provides the decoration plate at the side of the outer door plate facing the outside, to improve the beauty degree of the door assembly. Furthermore, the decoration plate further has a heat insulating function, and the amount of the heat dissipated from the door assembly to the outside can be further prevented by the decoration plate. In a possible embodiment, the decoration plate is made from a glass which can bear high temperature.

In the above embodiment, furthermore, the door assembly further comprises multiple connecting members which are respectively connected to the two sides of the mounting frame, and the connecting members are configured to connect the door assembly to the box body of the cooking appliance.

In the embodiment, the structure of the door assembly is further defined. In order that the door assembly can be mounted on the box body of the cooking appliance, the present disclosure further provides multiple connecting members in the door assembly, and the connecting members are configured to connect the door assembly to the box body of the cooking appliance. The multiple connecting members are respectively connected to the two sides of the mounting frame, the connecting members are connected to the mounting frame through a screw, at least a portion of the connecting members extend out of the door assembly and are inserted into the connecting holes of the cooking appliance matching the connecting members, and the door assembly can be connected to the box body of the cooking appliance.

The second aspect of the present disclosure further provides a cooking appliance, including: the door assembly provided in the first aspect of the present disclosure; a box body including a cooking cavity, and the door assembly is used for opening or closing the cooking cavity; a heat dissipation cavity communicating with the air inlets of the door assembly; a heat dissipating device provided in the heat dissipation cavity, and the heat dissipating device can form an air flow for heat dissipation, and discharge the air flow into the air ducts of the door assembly through the air inlets.

The cooking appliance provided in the present disclosure comprises the box body and the door assembly, the box body comprises the cooking cavity, and the door assembly is connected to the box body and can move between different positions with respect to the box body, and the door assembly can open or close the cooking cavity.

Furthermore, the cooking appliance further comprises the heat dissipation cavity, and the heat dissipation cavity is provided with the heat dissipating device therein, and the heat dissipating device comprises a fan. The heat dissipating device can form an air flow for heat dissipation when it operates, the heat dissipation cavity communicates with the air inlets of the door assembly, the air flow enters the door assembly through the air inlets, the door assembly comprises multiple air ducts communicating with the outside, and the air flow moves along the air ducts and is discharged to the outside, to achieve the function of lowering the temperature of the door assembly.

The cooking appliance provided in the second aspect of the present disclosure comprises the door assembly provided in the first aspect of the present disclosure, and thus has all the advantageous effects of the door assembly.

The cooking appliance can be an oven or a microwave steaming and baking integrated machine.

The additional aspects and advantages of the present disclosure will be obvious in the following description, or can be understood through the practice of the present disclosure.

### BRIEF DESCRIPTION OF THE DRAWINGS

The above and/or additional aspects and advantages of the present disclosure will be obvious and understood easily from the description of the embodiments in combination with the accompanying drawings:
FIG. 1 is a first schematic view of the structure of a door assembly according to an embodiment of the present disclosure;
FIG. 2 is a second schematic view of the structure of a door assembly according to an embodiment of the present disclosure;
FIG. 3 is an exploded view of a door assembly according to an embodiment of the present disclosure;
FIG. 4 is a third schematic view of the structure of a door assembly according to an embodiment of the present disclosure; and
FIG. 5 is a fourth schematic view of the structure of a door assembly according to an embodiment of the present disclosure.

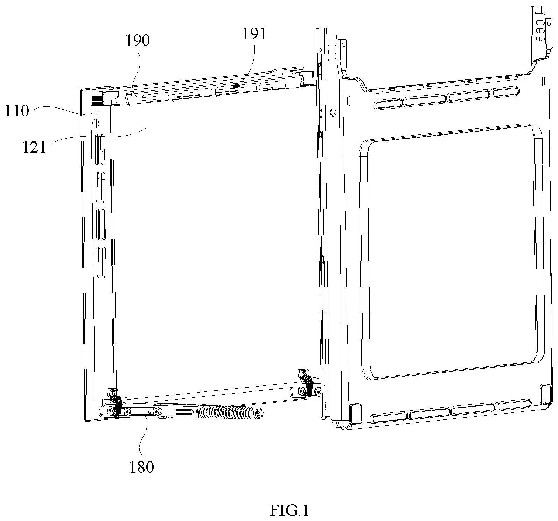

The corresponding relations between the reference signs and the component names in FIG. 1 to FIG. 5 are as follow:

100 door assembly; 110 main body; 120 door seal assembly; 121 first heat insulating plate; 122 connecting frame; 123 glue filling groove; 124 sealing member; 125 door seal frame; 126 mounting opening; 130 partition plate; 131 first partition plate; 132 second partition plate; 140 air duct; 141 first air duct; 142 second air duct; 150 middle frame assembly; 160 mounting frame; 161 baffle; 162 air outlet; 163: air discharge groove; 164 supporting member; 165 mounting groove; 166 limiting member; 170 outer door plate; 171 decoration plate; 180 connecting member; 190 upper cover; 191 air inlet.

### DETAILED DESCRIPTION OF THE DISCLOSURE

To more clearly understand the above purposes, features and advantages of the present disclosure, the present disclosure will be further detailed hereinafter in combination with the accompanying drawings and embodiments. It should be indicated that in the case of no conflict, the embodiments and the features in the embodiments of the present disclosure can be combined with each other.

Many details are illustrated in the following description for the convenience of a thorough understanding to the present disclosure, but the present disclosure can further be implemented using other embodiments other than these described herein. Therefore, the protection scope of the present disclosure is not limited to the embodiments disclosed in the following text.

A door assembly 100 and a cooking appliance according to some embodiments of the present disclosure are described in the following by referring to FIG. 1 to FIG. 5.

In some embodiments, as shown in FIG. 1, the first aspect of the present disclosure provides a door assembly 100 for a cooking appliance, and the door assembly 100 comprises: a main body 110; a door seal assembly 120, connected to one side of the main body 110 facing a cooking cavity of the cooking appliance, and the door seal assembly 120 is provided with a first heat insulating plate 121 at the side facing the cooking cavity, the first heat insulating plate 121 is made of a high temperature resistant material, and the first heating insulating plate 121 covers at least a portion of the main body 110.

The door assembly 100 provided in the present disclosure can be used in a cooking appliance, the cooking appliance comprises a box body, and the door assembly 100 is movably connected to the box body and can move between different positions with respect to the box body. The box body comprises a cooking cavity, the cooking cavity is configured to accommodate food ingredients, and the cooking appliance can cook the food ingredients in the cooking cavity. When the door assembly 100 moves between different positions, the door assembly 100 can open or close the cooking cavity.

In a possible embodiment, the cooking appliance is a microwave steaming and baking integrated machine having a high temperature self-cleaning function, when the cooking appliance performs high temperature self-cleaning to the cooking cavity, the temperature within the cooking cavity can reach 450°C, to carbonize the oil in the cooking cavity and then achieve the self-cleaning function. A conventional door body cannot bear the high temperature of 450°C, firstly, the door body can be easily damaged due to the high temperature, and then a portion of the components in the door body fail, and secondly, since the door body cannot effectively insulate the high temperature in the cooking cavity, the temperature of the outer wall of the door body is too high, and then users can be easily burned.

Furthermore, in order to avoid the above problems, the present disclosure provides a door seal assembly 120 which can improve the heat insulating effect in the door assembly 100. The door assembly 100 comprises the main body 110 and the door seal assembly 120; the door seal assembly 120 is connected to one side of the main body 110 facing the cooking cavity; when the door assembly 100 closes the cooking cavity, the door seal assembly 120 is attached to the box body of the cooking appliance to seal the cooking cavity. The first heat insulating plate 121 is provided at the side of the door seal assembly 120 facing the cooking cavity, and the first heat insulating plate 121 is made of a high temperature resistant material, and the first heat insulating plate 121 can be made of a Borosilicate glass.

Furthermore, in order to improve the beauty degree of the door assembly 100, the present disclosure disposes the first heat insulating plate 121 to cover at least a portion of the main body 110, i.e., the first heat insulating plate 121 can cover the entire main body 110 and the side of the door assembly 100 facing the cooking cavity is configured to be an all-glass structure, or it can further cover most of the main body 110. Thus, this makes the door assembly 100 more beautiful and simpler, and lowers the production costs of the door assembly 100, and has a good economic value.

Through disposing the first heat insulating plate 121 of the door seal assembly 120 at the side facing the cooking cavity to cover at least a portion of the main body 110, and through adopting the high temperature resistant material to manufacture the first heat insulating plate 121, the first heat insulating plate 121 can be configured to insulate heat to protect other components in the door assembly 100, cool down the interior of the door assembly 100 and cool down the wall face of the door assembly 100 facing the outside, prolong the service life of the door assembly 100, prevent the door assembly 100 from burning the user and improve the product safety. Moreover, as the first partition plate 131 covers at least a portion of the main body 110, the side of the door assembly 100 facing the cooking cavity is more beautiful and simpler, and then the beauty degree of the door assembly 100 is improved.

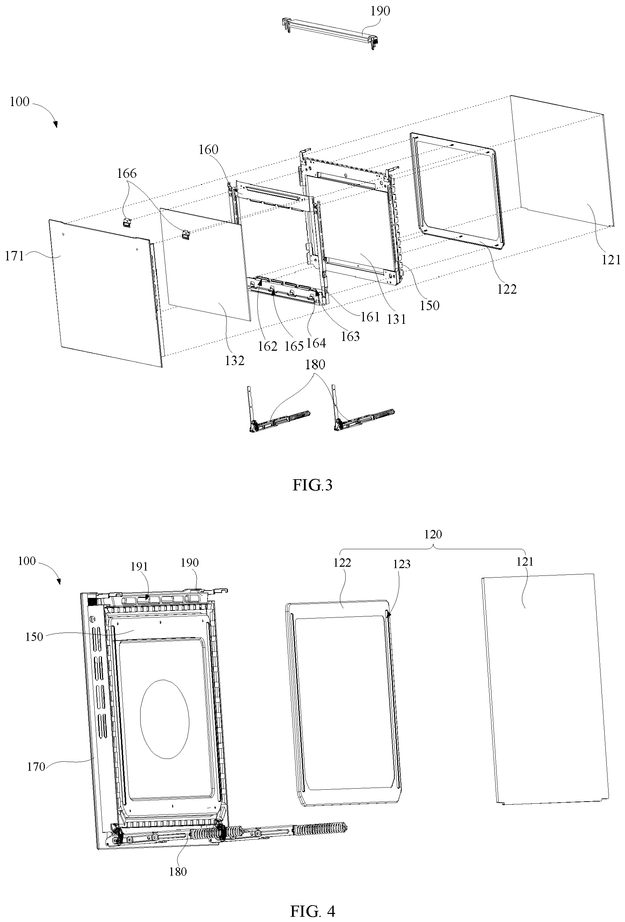

In some embodiments, as shown in FIG. 3, FIG. 4 and FIG. 5, the door seal assembly 120 further comprises: a connecting frame 122, connected to the main body 110, and the first heat insulating plate 121 is connected to the connecting frame 122, and is located at the side of the connecting frame 122 facing the cooking cavity.

In the embodiment, the structure of the door seal assembly 120 is further defined. The door seal assembly 120 further comprises the connecting frame 122, and the connecting frame 122 is configured to connect the first heat insulating plate 121 with the main body 110.The connecting frame 122 is located between the main body 110 and the first heat insulating plate 121, and is connected to the main body 110, and the first heat insulating plate 121 is connected to the side of the connecting frame 122 deviating from the main body 110, and thus, the first heat insulating plate 121 can be connected to the main body 110 through the connecting frame 122.

In a possible embodiment, the connecting frame 122 is made of a metal material, and the strength of the connecting frame 122 can meet use requirements, and the first heat insulating plate 121 can be stably connected to the main body 110; in addition, the metal material can bear a high temperature of 450°C,and the overall door assembly 100 can meet the temperature resistance requirements.

Through providing the connecting frame 122 in the door seal assembly 120, the first heat insulating plate 121 can be connected to the main body 110 through the connecting frame 122.

In some embodiments, the connecting frame 122 is located within the projection range of the first heat insulating plate 121.

In the embodiment, the relationship between the connecting frame 122 and the first heat insulating plate 121 is defined. The connecting frame 122 is located within the projection range of the first heat insulating plate 121. Understandably, since the first heat insulating plate 121 has the heat insulation function, therefore, through providing the connecting frame 122 within the projection range of the first heating insulating plate 121, the connecting frame 122 can be protected through the first heat insulating plate 121, and the influence to the connecting frame 122 due to the high temperature in the cooking cavity is reduced. Secondly, through providing the connecting frame 122 within the projection range of the first heat insulating plate 121, this prevents exposing the connecting frame 122 within the user's sight, and thus the door assembly 100 can keep beautiful and simple, and the beauty degree of the door assembly 100 is improved.

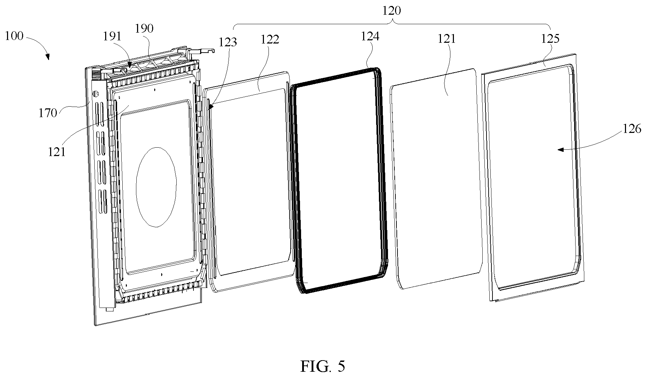

In some embodiments, as shown in FIG. 4 and FIG. 5, at least one glue filling groove 123 is provided at the side of the connecting frame 122 facing the cooking cavity; the glue filling groove 123 is configured to accommodate a binder and the first heat insulating plate 121 is bonded to the connecting frame 122.

In the embodiment, the connecting method between the connecting frame 122 and the first heat insulating plate 121 is defined. The first heat insulating plate 121 is bonded to the connecting frame 122. At least one glue filling groove 123 is provided at the side of the connecting frame 122 facing the cooking cavity, the glue filling groove 123 can accommodate a binder, and thus the first heat insulating plate 121 is bonded to the connecting frame 122 through the binder. Therefore, the first heat insulating plate 121 can be connected to the connecting frame 122, meanwhile, the side of the first heat insulating plate 121 facing the cooking cavity can keep tidy; compared with the structure that the first heat insulating plate 121 is connected to the connecting frame 122 by a screw, the present disclosure adopts the bonding method to connect the first heat insulating plate 122 to the connecting frame 122, and this can prevent the screw from exposing out of the surface of the first heat insulating plate 121, and improve the beauty degree of the door assembly 100.

Furthermore, in the case that there are multiple glue filling grooves 123, the multiple glue filling grooves 123 are respectively close to the two sides of the connecting frame 122, and the force on the two sides of the first heat insulating plate 121 is balanced, and the first heat insulating plate 121 can be more stably connected to the connecting frame 122.

Furthermore, the binder in the glue filling grooves 123 can bear a high temperature of 450°C, and thus the binder does not fail in a high temperature environment.

Through disposing the glue filling groove 123 in the connecting frame 122, the first heat insulating plate 121 can be bonded to the connecting frame 122 by filling glues in the glue filling groove 123, and thus, the side of the first heat insulating plate 121 facing the cooking cavity can keep tidy; compared with the structure that the first heat insulating plate 121 is connected to the connecting frame 122 by a screw, the present disclosure adopts the bonding method to connect the first heat insulating plate 121 to the connecting frame 122, and this can prevent the screw from exposing out of the surface of the first heat insulating plate 121, and improve the beauty degree of the door assembly 100.

In some embodiments, as shown in FIG. 5, the door seal assembly 120 further comprises: a sealing member 124, sleeved on the first heat insulating plate 121; a door seal frame 125, having a mounting opening 126, and the first heat insulating plate 121 and the sealing member 124 are mounted in the mounting opening 126, and the sealing member 124 is located between the first heat insulating plate 121 and the inner wall of the mounting opening 126.

In the embodiment, another structure of the door seal assembly 120 is defined. The door seal assembly 120 can further comprise the door seal frame 125 and the sealing member 124; compared with the structure that the side of the door seal assembly 120 facing the cooking cavity is disposed to be all glass, the structure of the door seal assembly 120 with the door seal frame 125 and the sealing member 124 arranged in such a way can have a better protection effect for the first heat insulating plate 121.

In an embodiment, the sealing member 124 is sleeved on the circumferential side of the first heat insulating plate 121; the door seal frame 125 has the mounting opening 126; the first heat insulating plate 121 and the sealing member 124 are mounted in the mounting opening 126, and at least a portion of the sealing member 124 is located between the first heat insulating plate 121 and the inner wall of the mounting opening 126; the sealing member 124 is compressed by the first heat insulating plate 121 and the inner wall of the mounting opening 126, and thus has the sealing function. The gap between the first heat insulating plate 121 and the inner wall of the mounting opening 126 can be sealed through the sealing member 124, to prevent the moisture in the cooking cavity from entering into the door assembly 100. In addition, wrapping the edge of the first heating insulate plate 121 with the sealing member 124 and the door seal frame 125 can have a certain protection function for the first heat insulating plate 121; compared with the structure that the side of the door seal assembly 120 facing the cooking cavity is configured to be all glass, the strength of the door seal assembly 120 provided with the door seal frame 125 and the sealing member 124 is enhanced, and furthermore, the reliability of the door assembly 100 is improved.

In some embodiments, the first heat insulating plate 121 is made of a high temperature resistant glass.

In the embodiment, the material of the first heat insulating plate 121 is defined. The first heat insulating plate 121 is made of a high temperature resistant glass, and therefore, the first heat insulating plate 121 has a good high temperature resistance performance, and the appearance of the high temperature resistant glass is tidy and beautiful, and thus, the beauty degree of the door assembly 100 is enhanced.

In a possible embodiment, the first heat insulating plate 121 is made of a Borosilicate glass.

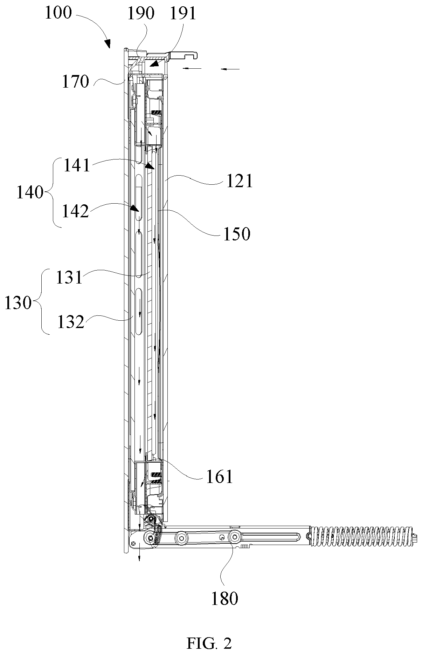

In some embodiments, as shown in FIG. 2 and FIG. 3, the door assembly 100 further comprises: multiple partition plates 130, located in the main body 110, and the multiple partition plates 130 are sequentially connected to the main body 110 along a direction deviating from the cooking cavity; multiple air ducts 140 are enclosed between any two adjacent partition plates 130 and between the inner wall of the main body 110 close to the cooking cavity and an adjacent partition plate 130, one end of the air duct 140 communicates with a heat dissipation cavity of the cooking appliance and the other end communicates with the outside, and the air ducts 140 are configured to discharge the air flow in the heat dissipation cavity, to cool down the door assembly 100.

In the embodiment, the structure of the door assembly 100 is further defined. The door assembly 100 comprises multiple air ducts 140, and the air ducts 140 can conduct heat dissipation to the door assembly 100, to cool down the door assembly 100. The door assembly 100 comprises the main body 110 and multiple partition plates 130, the main body 110 has a cavity structure therein, and the multiple partition plates 130 are provided in the main body 110; the partition plates 130 are configured to constitute the air ducts 140 for ventilation; the multiple partition plates 130 are all connected to the main body 110 and the partition plates 130 can keep fixed with respect to the main body 110, and the multiple partition plates 130 are arranged sequentially along the direction deviating from the cooking cavity, and thus, the multiple air ducts 140 are enclosed by the partition plates 130 and the wall face of the main body 110.

In an embodiment, the air ducts 140 are enclosed respectively between any two adjacent partition plates 130 and between the inner wall of the main body 110 close to the cooking cavity and an adjacent partition plate 130, and the main body 110 has multiple air ducts 140. The cooking appliance using the door assembly 100 further comprises the heat dissipation cavity, and a heat dissipating device for dissipating heat for the cooking appliance is provided in the heat dissipation cavity; the heat dissipating device can form an air flow and achieves the heat dissipation effect to the cooking appliance by discharging the air flow out of the cooking appliance. One end of any air duct 140 communicates with the outside and the other end communicates with the heat dissipation cavity, the air flow in the heat dissipation cavity can be discharged to the outside through the air ducts 140 in the door assembly 100, and thus, firstly, heat dissipation can be conducted to the door assembly 100 through the air ducts 140, and this prevents damaging the door assembly 100 due to the excessively high temperature in the door assembly 100, and secondly, through disposing the multiple partition plates 130, this effectively lowers the temperature of the wall face of the door assembly 100 facing the outside, and prevents the door assembly 100 from burning the user. Moreover, discharging the air flow in the heat dissipation cavity through the air ducts 140 in the door assembly 100 can further dissipate the heat in the heat dissipation cavity, and then has the function of lowering the temperature of the cooking appliance.

In a possible embodiment, the number of the partition plates 130 is two, the air ducts 140 are respectively enclosed between the two partition plates 130 and between the partition plate 130 close to the inner wall of the main body 110 and the inner wall of the main body 110, and the door assembly 110 has two air ducts 140 therein, compared with a door body provided with a single air duct 140, through providing at least two air ducts 140 in the door assembly 100, the present disclosure can improve the heat dissipation effect to the door assembly 100, and can insulate heat through the multiple partition plates 130, and avoid that the outer wall of the door assembly 100 is too hot.

Through providing multiple partition plates 130 in the main body 110, multiple air ducts 140 can be formed through the multiple partition plates 130, and the air flow in the heat dissipation cavity of the cooking appliance is discharged to the outside through the air ducts 140; firstly, heat dissipation to the door assembly 100 can be conducted through the multiple air ducts 140, and this prevents damaging the door assembly 100 due to the high temperature in the cooking cavity and prolongs the service life and reliability of the door assembly 100, and secondly, the temperature of the wall face of the door assembly 100 facing the outside can be lowered effectively, which prevents burning the user due to the excessively high temperature of the outer wall of the door assembly 100 and improves product safety.

In some embodiments, as shown in FIG. 3, the main body 110 comprises: a middle frame assembly 150; a mounting frame 160 connected to the middle frame assembly 150, and the mounting frame 160 is located at the side of the middle frame assembly 150 deviating from the cooking cavity, and the multiple partition plates 130 are respectively located at the two sides of the mounting frame 160.

In the embodiment, the structure of the main body 110 is defined. The main body 110 comprises the middle frame assembly 150 and the mounting frame 160, and the mounting frame 160 and the middle frame assembly 150 are respectively configured to fix the multiple partition plates 130. And the mounting frame 160 is located at the side of the middle frame assembly 150 deviating from the cooking cavity and is connected to the middle frame assembly 150, and there is a gap between the mounting frame 160 and the middle frame assembly 150.The mounting frame 160 can be connected to the middle frame assembly 150 through a screw, and can further be connected to the middle frame assembly 150 through other connecting methods. Furthermore, at least a portion of the multiple partition plates 130 are connected to the mounting frame 160, and at least a portion of the multiple partition plates 130 are connected to the middle frame assembly 150, to achieve mounting and fixing the multiple partition plates 130.

Furthermore, the multiple partition plates 130 are respectively located at the two sides of the mounting frame 160, and there is a gap between two adjacent partition plates 130, and an air duct 140 is enclosed between two adjacent partition plates 130. The inner wall of the middle frame assembly 150 constitutes the inner wall of the main body 110, and there is a gap between the partition plate 130 adjacent to the inner wall of the middle frame assembly 150 and the inner wall of the middle frame assembly 150, and the inner wall of the middle frame assembly 150 and the partition plate 130 enclose the air duct 140.

Through providing the middle frame assembly 150 and the mounting frame 160 in the main body 110, the multiple partition plates 130 can be fixed through the middle frame assembly 150 and the mounting frame 160; through providing the multiple partition plates 130 at the two sides of the mounting frame 160 respectively, there can be a gap between two adjacent partition plates 130, and then two adjacent partition plates 130 can enclose an air duct 140.

In some embodiments, as shown in FIG. 2 and FIG. 3, the multiple partition plates 130 comprise: a first partition plate 131, located between the mounting frame 160 and the middle frame assembly 150, and the first partition plate 131 is connected to the middle frame assembly 150, and the first partition plate 131 and the middle frame assembly 150 define a first air duct 141 of the multiple air ducts 140; and a second partition plate 132, located at the side of the mounting frame 160 deviating from the middle frame assembly 150, and the second partition plate 132 is connected to the mounting frame 160, and the second partition plate 132 and the first partition plate 131 define a second air duct 142 of the multiple air ducts 140.

In the embodiment, the multiple partition plates 130 and the multiple air ducts 140 are defined. The multiple partition plates 130 comprise the first partition plate 131 and the second partition plate 132, and the first partition plate 131 is located between the mounting frame 160 and the middle frame assembly 150, and is connected to the middle frame assembly 150.The first partition plate 131 can be connected to the middle frame assembly 150 through a screw, and can further be connected to the middle frame assembly 150 through other connecting methods. There is a gap between the first partition plate 131 and the inner wall of the middle frame assembly 150, and the first partition plate 131 and the inner wall of the middle frame assembly 150 define the first air duct 141 of the multiple air ducts 140. One end of the first air duct 141 communicates with the heat dissipation cavity and the other end communicates with the outside, and the air flow in the heat dissipation cavity can be discharged to the outside through the first air duct 141, to cool down the first one of the partition plates 130 and the middle frame assembly 150.

Furthermore, the multiple partition plates 130 further comprise the second partition plate 132, and the second partition plate 132 is located at the side of the mounting frame 160 deviating from the middle frame assembly 150 and is connected to the mounting frame 160.A mounting groove 165 is provided at the side of the mounting frame 160 deviating from the middle frame assembly 150 for mounting and fixing the second partition plate 132, the second partition plate 132 can be inserted into the mounting groove 165, in addition, the second partition plate 132 can further be connected to the mounting frame 160 through other methods, as long as the second partition plate 132 can be fixed with respect to the mounting frame 160 and there is a gap between the second partition plate 132 and the first partition plate 131. There is a gap between the first partition plate 131 and the second partition plate 132, and the second air duct 142 of the multiple air ducts 140 is defined between the first partition plate 131 and the second partition plate 132. One end of the second air duct 142 communicates with the heat dissipation cavity and the other end communicates with the outside, and the air flow in the heat dissipation cavity can be discharged to the outside through the second air duct 142, to cool down the first one of the partition plates 130, the second partition plate 132 and the mounting frame 160.

Through providing the first partition plate 131 and the second partition plate 132 in the door assembly 100, the first partition plate 131 and the inner wall of the middle frame assembly 150 enclose the first air duct 141, the second partition plate 132 and the first partition plate 131 enclose the second air duct 142, and the temperature of the middle frame assembly 150 and the first partition plate 131 can be lowered through the first air duct 141, and the temperature of the first partition plate 131 and the second partition plate 132 are lowered through the second air duct 142, to cool down the door assembly 100.

In some embodiments, as shown in FIG. 2 and FIG. 3, the door assembly 100 further comprises a baffle 161 connected to the side of the mounting frame 160 facing the middle frame assembly 150, and the baffle 161 is configured to support the first partition plate 131, the baffle 161 is provided with multiple air outlets 162, the air outlets 162 are located between the first partition plate 131 and the second partition plate 132, and the second air duct 142 communicates with the outside through the air outlets 162.

In the embodiment, the structure of the door assembly 100 is further defined. To further fix the first partition plate 131, the present disclosure further provides the baffle 161 in the door assembly 100 for supporting the first partition plate 131.The baffle 161 is connected to the side of the mounting frame 160 facing the middle frame assembly 150 and extends along the direction facing the middle frame assembly 150, the bottom wall of the first partition plate 131 abuts on the baffle 161, the baffle 161 can support the first partition plate 131, therefore, the first partition plate 131 can be further fixed, and the stability of the first partition plate 131 is further improved.

Furthermore, the baffle 161 is provided with multiple air outlets 162, the multiple air outlets 162 are located between the first partition plate 131 and the second partition plate 132, that is, the multiple air outlets 162 are located at the side of the first partition plate 131 deviating from the middle frame assembly 150, the air outlets 162 are located at the air discharging path of the second air duct 142, and the second air duct 142 can communicate with the outside through the air outlets 162. When air is discharged through the second air duct 142, the air flow in the heat dissipation cavity flows along the second air duct 142, and can flow to the outside through the multiple air outlets 162 in the baffle 161, to achieve the air discharging function of the second air duct 142.

Furthermore, the baffle 161 is further provided with multiple protrusions, the multiple protrusions are provided between the first partition plate 131 and the air outlets 162, therefore, the first partition plate 131 can be limited through the protrusions, and the first partition plate 131 avoids the air outlets 162, and this prevents the first partition plate 131 from shielding the air outlets 162 and then affecting the air discharge of the second air duct 142.

Through providing the baffle 161 on the mounting frame 160, the first partition plate 131 can be supported through the baffle 161, and this further improves the stability of the first partition plate 131. Moreover, the air outlets 162 are provided in the baffle 161, and the air outlets 162 are provided between the first partition plate 131 and the second partition plate 132, therefore the air flow in the second air duct 142 can be discharged through the air outlets 162, the communication between the second air duct 142 and the outside is achieved, then the air flow can be smoothly discharged through the second air duct 142, and the function of lowering the temperature of the door assembly 100 is achieved.

In some embodiments, as shown in FIG. 2 and FIG. 3, the baffle 161 is provided with multiple air discharge grooves 163, the air discharge grooves 163 are located between the first partition plate 131 and the middle frame assembly 150, and the first air duct 141 communicates with the outside through the air discharge grooves 163.

In the embodiment, the structure of the baffle 161 is further defined. Multiple grooves are provided at the side of the baffle 161 facing the middle frame assembly 150, the multiple grooves are respectively located in the two ends of the baffle 161, the middle frame assembly 150 and the groove wall of the grooves in the baffle 161 enclose the multiple air discharge grooves 163, the air discharge grooves 163 are located between the first partition plate 131 and the middle frame assembly 150 and located at the air discharging path of the first air duct 141, and the first air duct 141 can communicate with the outside through the air discharge grooves 163, the air flow in the first air duct 141 can be discharged to the outside through air discharge grooves 163, and the normal air discharging function of the first air duct 141 is achieved.

Through enclosing multiple air discharge grooves 163 by the baffle 161 and the middle frame assembly 150, the air discharge grooves 163 are provided between the first partition plate 131 and the middle frame assembly 150, and the first air duct 141 can communicate with the outside through the air discharge grooves 163, and then the normal air discharge of the first air duct 140 is achieved, and then the first air duct 140 can have the function of lowering the temperature of the door assembly 100.

In some embodiments, as shown in FIG. 2 and FIG. 3, the door assembly 100 further comprises: multiple supporting members 164, connected to the side of the mounting frame 160 deviating from the middle frame assembly 150, and any supporting member 164 and the mounting frame 160 enclose a mounting groove 165, and the second partition plate 132 is inserted into the mounting groove 165; at least one limiting member 166, connected to the side of the mounting frame 160 deviating from the middle frame assembly 150, and at least a portion of the second partition plate 132 is located between the limiting member 166 and the mounting frame 160, and the limiting member 166 is configured to limit the second partition plate 132.

In the embodiment, the structure of the mounting frame 160 is defined. To mount the second partition plate 132 on the mounting frame 160, the present disclosure provides the supporting members 164 in the mounting frame 160 for mounting the second partition plate 132, there are multiple supporting members 164, and the multiple supporting members 164 are connected to the side of the mounting frame 160 deviating from the middle frame assembly 150, any supporting member 164 and the mounting frame 160 enclose the mounting frame 165; a notch of the mounting groove 165 faces towards the mounting frame 160, and the second partition plate 132 is inserted into the mounting groove 165, to achieve mounting and fixing the second partition plate 132.

In an embodiment, the supporting member 164 is located in the area of the mounting frame 160 close to the lower part of the mounting frame 160. Any supporting member 164 extends along the direction deviating from the middle frame assembly 150 and bends along the direction facing above the mounting frame 160, there is a certain gap between the bending portion of any supporting member 164 and the mounting frame 160, and the bending portions of the multiple supporting members 164 and the mounting frame 160 jointly form the mounting groove 165. The second partition plate 132 can be inserted into the mounting groove 165 formed by the multiple supporting members 164, to mount and fix the second partition plate 132.

Through providing the multiple supporting members 164 in the mounting frame 160, the second partition plate 132 can be mounted and fixed through inserting the second partition plate 132 in the mounting groove 165 formed by the supporting members 164.

Furthermore, to further limit the second partition plate 132, the present disclosure further provides the limiting member 166 for limiting the second partition plate 132 on the mounting frame 160, the number of the limiting member 166 can be one, while there can further be multiple limiting members 166, and the limiting member 166 is connected to the side of the mounting frame 160 deviating from the middle frame assembly 150.The limiting member 166 is provided in the area of the mounting frame 160 close to the upper part of the mounting frame 160, and the end of the second partition plate 132 away from the supporting member 166 can be limited through the limiting member 166, thus, the upper end and the lower end of the second partition plate 132 can be respectively limited through the limiting member 166 and the supporting member 164, and the second partition plate 132 can be mounted on the mounting frame 160 stably.

Furthermore, the structure of the limiting member 166 is defined. The limiting member 166 is connected to the side of the mounting frame 160 deviating from the middle frame assembly 150, the limiting member 166 extends along the direction deviating from the middle frame assembly 150 and bends along the side facing the mounting groove 165, there is a gap between the bending of the limiting member 166 and the mounting frame 160, and at least a portion of the second partition plate 132 is located between the bending of the limiting member 166 and the mounting frame 160, therefore, the second partition plate 132 can be limited through the bending of the limiting member 166.

In a possible embodiment, the number of the limiting members 166 is two, and the two limiting members 166 are respectively close to the two sides of the second partition plate 132.

Through providing at least one limiting member 166 on the mounting frame 160, the second partition plate 132 can be further limited through the limiting member 166, and the second partition plate 132 can be stably fixed on the mounting frame 160, and product stability and reliability are improved.

In some embodiments, as shown in FIG. 3, the main body 110 further comprises an outer door plate 170 connected to the mounting frame 160, the outer door plate 170 is provided at the side of the second partition plate 132 deviating from the first partition plate 131, and a decoration plate 171 is provided at the side of the second partition plate facing the outside.

In the embodiment, the structure of the main body 110 is further defined. The main body 110 further comprises the outer door plate 170, and the outer door plate 170 is provided facing the outside, that is, the outer door plate 170 is located at the side facing the user. The outer door plate 170 is connected to the mounting frame 160, the side of the outer door plate 170 facing the mounting frame 160 is provided with multiple connecting grooves, the multiple connecting grooves are respectively close to the two sides of the outer door plate 170, the mounting frame 160 is provided with connecting protrusions matching the connecting grooves, and the connecting protrusions are inserted into the notches of corresponding connecting grooves, and the outer door plate 170 can be hooked on the mounting frame 160, and the connection between the mounting frame 160 and the outer door plate 170 is achieved.

Furthermore, to further mount and fix the outer door plate 170, the outer door plate 170 can further be connected to the middle frame assembly 150, the outer door plate 170 can be connected to the middle frame assembly 150 through a screw. Therefore, the outer door plate 170 can be mounted and fixed respectively through the cooperation between the connecting grooves and the connecting protrusions and the screw, and the outer door plate 170 keeps stable with respect to the mounting frame 160 and the middle frame assembly 150.

Furthermore, in order to keep the beauty of the door assembly 100, the present disclosure further provides the decoration plate 171 at the side of the outer door plate 170 facing the outside, to improve the beauty degree of the door assembly 100. Furthermore, the decoration plate 171 further has a heat insulating function, and the amount of the heat dissipated from the door assembly 100 to the outside can be further prevented by the decoration plate 171. In a possible embodiment, the decoration plate 171 is made from a glass which can bear high temperature.

In some embodiments, as shown in FIG. 3, the door assembly 100 further comprises multiple connecting members 180 which are respectively connected to the two sides of the mounting frame 160, and the connecting members 180 are configured to connect the door assembly 100 to the box body of the cooking appliance.

In the embodiment, the structure of the door assembly 100 is further defined. In order that the door assembly 100 can be mounted on the box body of the cooking appliance, the present disclosure further provides multiple connecting members 180 in the door assembly 100, and the connecting members 180 are configured to connect the door assembly 100 to the box body of the cooking appliance. The multiple connecting members 180 are respectively connected to the two sides of the mounting frame 160, the connecting members 180 are connected to the mounting frame 160 through a screw, at least a portion of the connecting members 180 extend out of the door assembly 100 and are inserted into the connecting holes of the cooking appliance matching the connecting members 180, and the door assembly 100 can be connected to the box body of the cooking appliance.

In some embodiments, as shown in FIG. 3, the door assembly 100 further comprises an upper cover 190 connected to the middle frame assembly 150, and the upper cover 190 is provided with multiple air inlets 191, and the air inlets 191 communicate with the heat dissipation cavity of the cooking appliance, and the first air duct 141 and the second air duct 142 communicate with the air inlets 191.

In a possible embodiment, the present disclosure provides a door assembly 100 with air ducts (i.e., the air ducts 140), and a cooling air duct has a certain cooling function for the entire door assembly 100.

To solve the temperature resistant problem of the door seal assembly 120 in the door assembly 100 when the cooking appliance performs high temperature self-cleaning, a portion of the first heat insulating plate 121 in the door seal assembly 120 adopts an all-glass structure, and thus the door seal assembly 120 has a beautiful appearance and the temperature resistant problem of the door seal assembly 120 is effectively solved.

As shown in FIG. 2, the air flow formed by a fan (i.e., the heat dissipating device) in the cooking appliance passes through a front plate, then enters through the upper cover on the upper portion of the door assembly 100, and then perpendicularly enters into the interior of the door assembly 100. The interior of the door assembly 100 is divided into two layers of air ducts, and the first layer of air duct (i.e., the second air duct 142) is located between the outer layer of the heat insulating glass (the second partition plate 132) and an intermediate heat insulating glass (i.e., the first partition plate 131), and perpendicularly leads to the bottom of the door assembly 100; a second layer of air duct (i.e., the first air duct 141) enters between the intermediate heat insulating glass and the middle frame assembly 150from a sub-path above the door assembly 100, joins the first layer of air duct at the lower end of the intermediate heat insulating glass, and then blows out from the lower layer of the door assembly 100.

The structure of the door assembly 100 is shown in FIG. 3, i.e., the outer heat insulating glass is fixed to a main frame (i.e., the mounting frame 160) through the lower end, the upper end is fixed to the main frame through two sheets (i.e., the limiting member 166), and the main frame is connected to the middle frame assembly 150 through a screw.

The fixing method of the glass assembly (i.e., the outer door plate 170) is as follows: the upper portion of the main frame is provided with hooks, the glass assembly is hooked on the main frame from bottom to top; after being positioned, the lower portion of the glass assembly is fixed to the lower portion of the middle frame assembly 150 through the screw. The connecting plate is fixed on the middle frame assembly 150 through the screw, the connecting plate (i.e., the connecting frame 122) is provided with a glue groove (i.e., the glue filling groove 123), the outer layer of glass (i.e., the first heat insulating plate 121) can be fixed to the connecting plate, and the outer layer of glass is made of a Borosilicate glass and can bear high temperature.

In addition, a hinge (i.e., the connecting member 180) is mounted on the main frame, and configured to connect the door assembly 100 to the box body of the cooking appliance. In the cooking appliance with the door assembly 100 adopting the all-glass solution, a sealing ring structure is provided on the front plate of the box body of the cooking appliance facing the door assembly 100, to cooperate with the glass assembly.

The second aspect of the present disclosure further provides a cooking appliance, including: the door assembly 100 provided in the first aspect of the present disclosure; a box body including a cooking cavity, and the door assembly 100 is used for opening or closing the cooking cavity; a heat dissipation cavity communicating with the air inlets of the door assembly 100; a heat dissipating device provided in the heat dissipation cavity, and the heat dissipating device can form an air flow for heat dissipation, and discharge the air flow into the air ducts 140 of the door assembly 100 through the air inlets.

The cooking appliance provided in the present disclosure comprises the box body and the door assembly 100, the box body comprises the cooking cavity, and the door assembly 100 is connected to the box body and can move between different positions with respect to the box body, and the door assembly 100 can open or close the cooking cavity.

Furthermore, the cooking appliance further comprises the heat dissipation cavity, and the heat dissipation cavity is provided with the heat dissipating device therein, and the heat dissipating device comprises a fan. The heat dissipating device can form an air flow for heat dissipation when it operates, the heat dissipation cavity communicates with the air inlets of the door assembly 100, the air flow enters the door assembly 100 through the air inlets, the door assembly 100 comprises multiple air ducts 140 communicating with the outside, and the air flow moves along the air ducts 140 and is discharged to the outside, to achieve the function of lowering the temperature of the door assembly 100.

The cooking appliance provided in the second aspect of the present disclosure comprises the door assembly 100 provided in the first aspect of the present disclosure, and thus has all the advantageous effects of the door assembly 100.

The cooking appliance can be an oven or a microwave steaming and baking integrated machine.

In the specification of the present disclosure, the term of "multiple" indicates two or more, unless otherwise explicitly specified or defined; the terms of "mount", "connected to", "connect with", "fixing" and the like should be understood in a broad sense, for example, the term "connected to" may be a fixed connection, and may further be a removable connection, or an integral connection; and the term of "connect with" may be a direct connection and may further be an indirect connection through an intermediate medium. A person of ordinary skills in the art could understand the specific meanings of the terms in the present disclosure according to specific situations.

In the description of the present specification, the descriptions of the phrases "one embodiment", "some embodiments" and "specific embodiments" and the like mean that the specific features, structures, materials or characteristics described in combination with the embodiment(s) or example(s) are included in at least one embodiment or example of the present disclosure. In the specification, the schematic representation of the above phrases does not necessarily refer to the same embodiment or example. Moreover, the particular features, structures, materials or characteristics described may be combined in a suitable manner in any one or more of the embodiments or examples.

The descriptions above are only some embodiments of the present disclosure, and are not configured to limit the present disclosure. For a person skilled in the art, the present disclosure may have various changes and variations. Any modifications, equivalent substitutions, improvements, etc. made within the spirit and principle of the present disclosure shall all be included in the protection scope of the present disclosure.

## Claims

1. A door assembly for a cooking appliance, wherein, the door assembly comprises:
a main body; and
a door seal assembly, connected to one side of the main body facing a cooking cavity of the cooking appliance, wherein the door seal assembly is provided with a first heat insulating plate at the side facing the cooking cavity, the first heat insulating plate is made of a high temperature resistant material, and the first heating insulating plate covers at least a portion of the main body.

2. The door assembly according to claim 1, wherein, the door seal assembly further comprises:
a connecting frame, connected to the main body, wherein the first heat insulating plate is connected to the connecting frame, and is located at a side of the connecting frame facing the cooking cavity.

3. The door assembly according to claim 2, wherein,
the connecting frame is located within a projection range of the first heat insulating plate.

4. The door assembly according to claim 2, wherein,
at least one glue filling groove is provided at the side of the connecting frame facing the cooking cavity, and the glue filling groove is configured to accommodate a binder to bond the first heat insulating plate to the connecting frame.

5. The door assembly according to claim 2, wherein, the door seal assembly further comprises:
a sealing member, sleeved on the first heat insulating plate; and
a door seal frame, having a mounting opening, wherein the first heat insulating plate and the sealing member are mounted in the mounting opening, and the sealing member is located between the first heat insulating plate and an inner wall of the mounting opening.

6. The door assembly according to claim 2, wherein,
the first heat insulating plate is made of a high temperature resistant glass.

7. The door assembly according to any one of claims 1 to6, further comprising:
multiple partition plates, located in the main body, wherein the multiple partition plates are sequentially connected to the main body along a direction deviating from the cooking cavity; and
multiple air ducts are enclosed between any two adjacent partition plates and between an inner wall of the main body close to the cooking cavity and an adjacent partition plate, one end of the air duct communicates with a heat dissipation cavity of the cooking appliance and an other end communicates with outside, and the air ducts are configured to discharge air flow in the heat dissipation cavity, to cool down the door assembly.

8. The door assembly according to claim 7, wherein, the main body comprises:
a middle frame assembly; and
a mounting frame connected to the middle frame assembly, wherein the mounting frame is located at a side of the middle frame assembly deviating from the cooking cavity, and the multiple partition plates are respectively located at two sides of the mounting frame.

9. The door assembly according to claim 8, wherein, the multiple partition plates comprise:
a first partition plate, located between the mounting frame and the middle frame assembly, wherein the first partition plate is connected to the middle frame assembly, and the first partition plate and the middle frame assembly define a first air duct of the multiple air ducts; and
a second partition plate, located at a side of the mounting frame deviating from the middle frame assembly, wherein the second partition plate is connected to the mounting frame, and the second partition plate and the first partition plate define a second air duct of the multiple air ducts.

10. The door assembly according to claim 9, further comprising:
a baffle connected to a side of the mounting frame facing the middle frame assembly, wherein, the baffle is configured to support the first partition plate, and
the baffle is provided with multiple air outlets, the air outlets are located between the first partition plate and the second partition plate, and the second air duct communicates with the outside through the air outlets.

11. The door assembly according to claim 10, wherein,
the baffle is further provided with multiple air discharge grooves, the air discharge grooves are located between the first partition plate and the middle frame assembly, and the first air duct communicates with the outside through the air discharge grooves.

12. The door assembly according to claim 9, further comprising:
multiple supporting members, connected to the side of the mounting frame deviating from the middle frame assembly, wherein any supporting member and the mounting frame enclose a mounting groove, and the second partition plate is inserted into the mounting groove; and
at least one limiting member, connected to the side of the mounting frame deviating from the middle frame assembly, wherein, at least a portion of the second partition plate is located between the limiting member and the mounting frame, and the limiting member is configured to limit the second partition plate.

13. The door assembly according to claim 9, wherein, the main body further comprises:
an outer door plate connected to the mounting frame, wherein, the outer door plate is provided at a side of the second partition plate deviating from the first partition plate, and a decoration plate is provided at a side of the second partition plate facing the outside.

14. The door assembly according to claim 8, further comprising:
multiple connecting members, respectively connected to the two sides of the mounting frame, wherein the connecting members are configured to connect the door assembly to a box body of the cooking appliance.

15. A cooking appliance, comprising:
a door assembly according to any one of claims 1 to 14;
a box body comprising a cooking cavity, wherein the door assembly is used for opening or closing the cooking cavity;
a heat dissipation cavity communicating with an air inlet of the door assembly; and
a heat dissipating device provided in the heat dissipation cavity, wherein the heat dissipating device is able to form hot air for heat dissipation, and discharge the hot air into an air duct of the door assembly through the air inlet.

16. The cooking appliance according to claim 15, wherein,
the cooking appliance is an oven or a microwave steaming and baking integrated machine.
